# EUROPEAN PATENT APPLICATION

(11) **EP 4 224 615 A1**
(43) Date of publication of application: **09.08.2023**
(21) Application number: 22155336.5
(22) Date of filing: 07.02.2022
(51) Int. Cl.: H01M 50/503, H01M 50/521, H01M 50/204, H01M 50/262

(54) **A HIGH-PERFORMANCE BATTERY CELL, CONTACT STRUCTURE, AND BATTERY ARRANGEMENT**

(71) Applicant: ABB SCHWEIZ AG, 5400 Baden (CH)
(72) Inventor: SCHULER, Gabriel, 6415 Arth (CH); HE, Minglong, 5400 Baden (CH); CHARTOUNI, Daniel, 5430 Wettingen (CH); KRAMER, Axel, 8057 Zürich (CH)
(74) Representative: Qip Patentanwälte Dr. Kuehn & Partner mbB

(57) **Abstract**

A high-performance battery cell (20) is provided. The high-performance battery cell (20) comprises a cell body and at least two electrical contacts (30, 32), the cell body comprising at least two side surfaces (22, 24, 26), wherein at least one of the electrical contacts (30, 32) is formed and arranged such that the corresponding electrical contact (30, 32) covers between 10% and 100% of at least one of the side surfaces (22, 24, 26).

## Description

### FIELD OF THE INVENTION

The invention relates to the field of high-performance battery cells. In particular, the invention relates to a high-performance battery cell, to a contact structure for mechanically holding and electrically contacting a high-performance battery cell, and to a battery arrangement comprising a contact structure and at least one high-performance battery cell.

### BACKGROUND OF THE INVENTION

An increasing number of vehicles, e.g. cars, trains, subways, busses, is equipped with high-performance battery cells. A typical high-performance battery cell may have a nominal capacity between 15 Ah and 1.000 Ah and may be used for driving the corresponding vehicle, in particular for providing a power train of the corresponding vehicle with energy.

Conventional high-performance battery cells may be fully assembled and encapsulated in modules. Then, the modules may be combined and encapsulated as battery packages. This may result in significant cost and time-consuming expensive hazardous material shipping due to the huge cell mass shipped from the battery cell supplier site to the module/package assembly site, e.g. if the battery cells are produced in Asia, the modules may be manufactured in Europe and the final application may run in Asia.

These battery packages may be arranged in the vehicles. In the most cases, the battery packages are not designed to be removed easily, e.g. in order to substitute one or more of the battery cells. In contrast, it is common practice that intense efforts have to be taken to remove the battery packages. However, then the battery cells are still enclosed in the modules which are enclosed within the packages. Separating the modules from each other and/or separating the battery cells of one of the modules from each other involves further efforts and costs, because neither the modules nor the battery cells are designed for being separated from each other easily.

During the manufacturing, in particular during an end-of-line test or in a first lifetime period of the battery packages, detected failures of single battery cells of the battery packages may be solved by exchanging the smallest replaceable unit. However, because the smallest replaceable units are given by the corresponding battery cells and because the battery cells are encapsulated within the modules which themselves are encapsulated within the packages, significant costs may be triggered because of one single defective battery cell. Further, the end-of line battery cell failure detection itself may already require the exchange of the battery cells to be measured. This may be impossible or at least may require a removal of cell interconnectors and a machining of the surfaces of the electrical contacts (in other words: tabs). This may be accompanied by significant and/or expensive efforts.

The electrical contacts of conventional battery cells may be welded to each other and/or to battery terminals within each of the modules. In addition, the electrical contacts of the conventional modules may be welded to each other and/or to module terminals within the corresponding battery package. However, these welding connections may be time consuming and non-removable. Further, an end-of-life disassembly may be impossible or may require significant efforts.

Further, today's battery systems are highly customized and non-standardized due to application specific boundary conditions, as e.g. the available space given in Battery Electric Vehicles (BEV) or battery system integration constraints in trains, buses or other moving or stationary battery storage equipment. This fact may result in a multitude of module and package formats with a low level of standardization.

A battery cell chemistry is improved steadily resulting in longer lifetimes and enhanced energy and power capabilities. The lifetime of the battery cells may be chemistry dependent and some applications may require an exchange of the battery cells during the lifetime of the system (e.g. in train, subway, bus or any other transpiration or even stationary application). Nowadays this may be carried out by a replacement of the entire modules or packages due to lifetime or failure means replacement of valuable equipment, as e.g. the module shell, the cooling equipment, BMS parts, and/or terminals which may could be reused. This may be especially advantageous, if large parts of the modules and/or packages may be reused, e.g. a cooling system, a module hull, etc. However, the exchange of the entire modules or, respectively, packages may lead to significant efforts and costs.

Further efforts may be required to disassemble modules and sort materials for further recycling. This may represent additional costs, especially if the battery cells are permanently fixed in a module or package shell, e.g. by gluing, bonding or welding.

### DESCRIPTION OF THE INVENTION

Therefore, it is an objective of the present invention to provide a high-performance battery cell which may be installed and/or exchanged simple and cost-efficient, e.g. on module, package, and/or system level in the corresponding factory or directly on the application, and/or which may enable a simple and/or cost-efficient handling for second use sorting and end-of-life battery cell recycling, and/or which enables a proper, e.g. low resistance, connection between neighboring battery cells.

Further, it is an objective of the present invention to provide a contact structure for mechanically holding and electrically contacting a high-performance battery cell, the contact structure enabling a simple and cost-efficient installation and/or exchange of the battery cell, e.g. on module, package, and/or system level in the corresponding factory or directly on the application, and/or which may enable a simple and/or cost-efficient handling of the battery cell for second use sorting and end-of-life battery cell recycling, and/or which enables a proper, e.g. low resistance, connection to the battery cell.

Furthermore, it is an objective of the present invention to provide a battery arrangement comprising the contact structure and at least one high-performance battery cell.

These objectives are achieved by the subject-matter of the independent claims. Further exemplary embodiments are evident from the dependent claims and the following description.

In particular, an objective of the present invention is achieved by a high-performance battery cell, comprising a cell body and at least two electrical contacts, the cell body comprising at least two side surfaces, wherein at least one of the electrical contacts is formed and arranged such that the corresponding electrical contact covers between 5% and 100% of at least one of the side surfaces. The electrical contact may cover between 25% and 100%, e.g. between 50% and 100%, e.g. between 75% and 100% of the corresponding side surface. Optionally, both electrical contacts may cover between 10% and 100% of the side surfaces, on which the electrical contacts are arranged. The electrical contacts may be arranged at opposing or non-opposing (e.g. adjacent) side surfaces of the cell body. In the following, the electrical contact covering between 10% and 100% of at least one of the side surfaces may be referred to as first electrical contact and the other electrical contact may be referred to as second electrical contact. The electrical contacts may correspond to the poles of the battery cell. For example, the one of the electrical contacts may correspond to the plus-pole and the other one of the electrical contacts may correspond to the minus-pole of the battery cell. The battery cell may comprise three or more electrical contacts, e.g. for electrical contacts. For example, the battery cell may comprise two negative electrical contacts and/or two positive electrical contacts, wherein each of the electrical contacts corresponds to a corresponding pole of the battery cell, or wherein two or more of the negative electrical contact may be coupled to the same negative pole and two or more of the positive electrical contacts may be coupled to the same positive pole. This may especially be advantageous for large battery cells and may enable a very good fixation of the battery cell within a battery module, in particular if the fixation is realised via the electrical contacts, as explained below.

Optionally, an additional press-fit structure for holding battery cell by a press-fit may be provided, e.g. if the battery cell is very heavy. This may assist the elastic contact element in holding the battery cell. The additional press-fit structure may be provided by spacers arranged between two of the battery cells and/or between the battery cell and an compartment for accommodating the battery cell.

The large surface of the first electrical contact allows for a weldless, in particular direct, low resistance connection between two or more battery cells and/or a weldless, in particular direct, connection from a Battery Management System (BMS) to the first electrical contact on module, package, or system level. Of course, an indirect connection of electrical contacts of adjacent battery cells via a cell connector, in particular a weldless cell connector, may also be feasible. "Direct" may mean in this context, that there is an immediately physical contact between the corresponding electrical contacts, in particular without any contact medium or coupling medium between the corresponding electrical contacts. This contributes to a flexible and lightweight battery arrangement. The direct connection between the battery cells may reduce the number of parts of the battery arrangement as no cell-to-cell connectors may be required and/or may allow to minimize a total cell-to-cell electrical resistance. Further, the module level may be omitted. The weldless contacting of the battery cells to the BMS system on module, package, or system level may enable a reliable and easy BMS contacting and/or reuse of BMS parts in case of a battery cell exchange.

The weldless and simple installation of the battery cells allows for a module, package and/or battery arrangement manufacturing independent of a battery cell manufacturing site. For example, battery cells may be shipped directly from the battery cell supplier to the application site, e.g. the vehicle manufacturer or the vehicle provider, what may contribute to shorten and/or lower shipping efforts. In stationary applications this represents a similar advantage, as battery cells could be replaced on-site without exchange of module or pack parts and therefore without disassembly of the storage system.

Further, the large first electrical contact contributes to a very efficient cooling of the battery cell through the large surface of the first electrical contact.

According to an embodiment, the sides of the cell body have different sizes and at least one of the electrical contacts is arranged on a side of the cell body, which is not the smallest side of the cell body. For example, one or both of the electrical contacts may be arranged on the largest sides of the cell body, wherein the electrical contacts may be arranged on the same or on different sides of the cell body.

According to an embodiment, at least one of the electrical contacts continuously extends over at least two sides of the battery cell. The electrical contact extending over at least two sides of the battery cell may cover the whole surface(s) of one or both of the corresponding sides, a part of the surface(s) of the corresponding sides, or the whole surface of one of the corresponding sides and a part of the surface of the other of the corresponding sides. For example, the part of the electrical contact being arranged on one side may be used for electrically contacting the battery cell and the part of the electrical contact being arranged on the other side may be used for electrically contacting the battery cell to the BMS.

According to an embodiment, a surface of at least one of the electrical contacts comprises a macroscopic 3D-structure for enhancing a size of the surface, wherein the surface faces away from the cell body. This may be especially advantageous, if the contact element to which the electrical contact comprising the 3D-structure is connected comprises another 3D-structure, wherein the 3D-structures may be configured for being engaged with each other. However, the contact element to which the electrical contact comprising the 3D-structure is connected does not have to have the 3D-structure also. It could as well be that only one side has the 3D-structur and the other side may be flat. In that case the flat side may be foreseen to be made of a softer material than the 3D-structure in order to adapt during assembly to the counter side having the 3D-structur. The 3D-structure may comprise a zic-zac profile, or a plurality of conical, tapered, domed, or pyramidal protrusions. That the 3D-structure is macroscopic means in this context, that a hight of the structure, e.g. a hight of the top of the profile or, respectively, of the protrusions, measured from a bottom of the structure is within a range from 0.0001 mm to 10 mm, e.g. from 0.001 mm to 10 mm, e.g. from 0.01 mm to 10 mm, e.g. from 0.1 mm to 5 mm, e.g. about 1mm.

According to an embodiment, at least one of the electrical contacts is deformable and comprises a compressive strength between 0.0001 N/mm² and 400 N/mm², e.g. from 0.001 N/mm² and 100 N/mm², e.g. from 0.01 N/mm² and 10 N/mm², e.g. from 0.1 N/mm² and 1 N/mm². If the electrical contact of the battery cell is deformed when the battery cell is arranged in a compartment for accommodating the battery cell, the contact surface is correspondingly increased and the electrical resistance of the contact is correspondingly decreased. Further, the deformed electrical contact may be exchanged when the battery cell is exchanged. For example, the 3D-structure may be the deformable part of the corresponding electrical contact.

According to an embodiment, one of the electrical contacts protrudes from the corresponding side of the battery cell and the other one of the electrical contacts is arranged within an indentation of the battery cell such that a surface of the corresponding electrical contact is set back with respect to a surface of the corresponding side of the battery cell. For example, the electrical contact protruding from the side of the battery cell protrudes from the corresponding side about the same amount as the electrical contact being set back from the side of the battery cell is set back from the corresponding side. Further, the electrical contacts may be formed and arranged such that, if two of the battery cells are arranged at each other, the protruding electrical contact of one of the battery cells protrudes into the indentation of the set-back electrical contact of another one of the battery cells such that the corresponding electrical contacts are electrically contacted to each other. The protrusion and indentation may function as simple orientation and/or form features which may allow for an easy and/or correct cell polarity assembly and/or may prevent wrong cell polarity in manufacturing and service.

According to an embodiment, the high-performance battery cell comprises first engaging means being arranged at one side of the battery cell, and second engaging means being arranged at another side of the battery cell facing away from the one side of the battery cell. The first engaging means may be configured for being engaged to second engaging means of another battery cell, and the second engaging means may be configured for being engaged to first engaging means of further another battery cell. The first and second engaging means enable to provide a battery package consisting of the battery cells being engaged to each other only. In particular, the first and second engaging means enable to omit the module level and any module structure, module housing, or module compartment for encapsulating several battery cells within one module. The mechanical interconnection of one cell body to another cell body provided by the engaging means may allow to use a stiff structure of a prismatic cell body without significant additional mechanical support effort on module level, and even on package, or system level.

An objective of the present invention is achieved by a high-performance battery cell comprising a cell body and at least two electrical contacts, wherein at least one of the electrical contacts forms an engaging mean, in particular a third engaging mean, configured for being engaged to an engaging mean, in particular a fourth engaging mean, wherein the third and fourth engaging means are configured for providing a form-fit connection and/or a press-fit connection, and wherein the fourth engaging mean is arranged on another battery cell or at a contact structure for holding the battery cell.

According to an embodiment, at least one of the electrical contacts of the battery cell forms the third engaging mean and at least one of the other electrical contact of the same battery cell forms a fourth engaging mean configured for being engaged to a third engaging mean of another battery cell.

According to an embodiment, the high-performance battery cell has a nominal capacity between 15 Ah and 1.000 Ah. The nominal capacity may be between 20 Ah and 500 Ah, e.g. between 25 Ah and 100 Ah.

According to an embodiment, the cell body has a prismatic shape. For example, the cell body may have a cuboid shape. This may contribute to a space saving arrangement of two or more of the battery cells.

An objective of the present invention is achieved by a contact structure for mechanically holding a high-performance battery cell, e.g. one of the above battery cells. The contact structure may comprise at least one compartment for accommodating the battery cell, the compartment comprising a first inner side wall and a second inner side wall opposite to the first inner side wall, and at least one elastic contact element, the contact element being arranged at the first inner side wall of the compartment and protruding into the compartment. The elastic contact element may be a spring or an elastic body comprising an elastic material such as e.g. rubber or silicon. The compartment and the contact element may be configured for holding the battery cell by a press-fit between the contact element and the second inner side wall of the compartment. Optionally, another contact element may be provided at the second inner side wall, wherein the battery cell may be arranged between the contact elements and may be held by the press-fit provided by both of the contact elements.

The above features, advantages and/or effects of the high-performance battery cell may be transferred to the above contact structure. Therefore, a repetition of these features, advantages and/or effects is omitted and it is referred to the above explanations only in order to provide a concise description.

According to an embodiment, the contact element is electrically conductive and configured for electrically contacting the battery cell. So, the contact structure may be configured for mechanically holding and electrically contacting the high-performance battery cell, e.g. one of the above battery cells. The whole contact element may be elastic and electrically conductive. For example, the contact element may be an electrically conductive spring. The spring may be made of spring steel. Alternatively, the contact element may comprise an elastic part and an electrically conductive part being coupled to each other. For example, the elastic part may be provided by an elastic body made of an elastic material, e.g. rubber or silicon, wherein the elastic body may be covered by an electrically conductive layer. Alternatively or additionally, electrically conductive particles may be embedded into the elastic body in order to provide the electrical conductivity of the contact element. In case of the contact element not being a spring, the contact element may have a modulus of elasticity between 0.01 GPa and 300 GPa, e.g. between 0.1 GPa and 100 GPa, e.g. between 1 GPa and 10 GPa and/or may comprise an elastomer.

According to an embodiment, the compartment is configured for accommodating at least two of the battery cells and the contact element is configured for holding both battery cells. For example, the contact element may comprise a contact plate which is configured for facing the battery cells and/or for extending over at least a part of the sides of the battery cells facing the contact element. The contact plate may be configured for electrically contacting both battery cells. In particular, the contact plate may be configured for electrically contacting one of the electrical contacts, e.g. the first electrical contact, of a first battery cell and one of the electrical contacts, e.g. the second electrical contact, of a second battery cell.

According to an embodiment, at least that part of the contact element which contacts the electrical contact of the battery cell has a compressive strength which is smaller than the compressive strength of the corresponding electrical contact of the battery cell. If the electrical contact of the battery cell and/or if the contact element is deformed when the battery cell is arranged in the compartment, the contact surface is correspondingly increased and the electrical resistance of the contact is correspondingly decreased. If the electrical contact of the battery cell is deformed and if the contact element is not deformed when the battery cell is arranged in the compartment, the deformed entity may be exchanged when the battery cell is exchanged, wherein the undeformed entity may be used again for the new battery cell.

According to an embodiment, at least one of the electrical contacts of the battery cell extends away from the corresponding battery cell in an extension direction, and the battery cell is held by the press-fit between the contact element and the second inner side wall of the compartment by the electrical contact being held by the press-fit, wherein the pressure of the press-fit is applied perpendicular to the extension direction. In other words, the pressure of the press-fit may be applied perpendicular to an extension direction of the battery cell. So, the battery cell may be held within the compartment by its electrical contact being held by the press-fit and being squeezed between the first and second inner side wall of the compartment. Optionally, one, two or more conductors and/or isolators may be arranged between the contact element and the corresponding electrical contact, or between the electrical contacts of two neighbouring battery cells in order to electrically contact or, respectively, separate the corresponding electrical contacts with or from each other, wherein the conductors and/or isolators may function as spacers between the corresponding electrical contacts.

According to an embodiment, at least one of the electrical contacts of the battery cell comprises a first section extending away from the cell body and a second section extending away from the first section. An angle between the first section and the second section may be 90°. The second section of one battery cell may overlap the second section of a neighbouring battery cell. The contact element may be configured for applying the pressure on one of the second sections such that this second section is pressed to the other second section. If two battery cells are arranged next to each other, they may be arranged such that the second sections of the electrical contacts of different battery cells overlap and thereby contact each other.

According to an embodiment, the contact structure comprises a cooling structure which is coupled to the contact element. The cooling structure may be embedded or attached to the contact element. The cooling structure may comprise one or more tubes for guiding a cooling medium, wherein the tubes may be in direct physical contact with the contact element. For example, the contact element may comprise a recess which may be used as the tube of the cooling structure.

An objective of the present invention is achieved by a battery arrangement comprising the above contact structure and at least one of the above high-performance battery cells, the battery cell being arranged in the compartment of the contact structure.

The above features, advantages and/or effects of the high-performance battery cell and the above contact structure may be transferred to the battery arrangement. Therefore, a repetition of these features, advantages and/or effects is omitted and it is referred to the above explanations only in order to provide a concise description.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an exemplary embodiment of a high-performance battery cell;
Fig. 2 schematically shows an exemplary embodiment of a battery arrangement;
Fig. 3 schematically shows a detailed view of an exemplary embodiment of electrical contacts of a high-performance battery cell;
Fig. 4 schematically shows an exemplary embodiment of a high-performance battery cell;
Fig. 5 schematically shows an exemplary embodiment of two high-performance battery cells;
Fig. 6 schematically shows an exemplary embodiment of a battery arrangement;
Fig. 7 schematically shows an exemplary embodiment of a high-performance battery cell;
Fig. 8 schematically shows an exemplary embodiment of two high-performance battery cells;
Fig. 9 schematically shows an exemplary embodiment of a battery arrangement;
Fig. 10 schematically shows an exemplary embodiment of a high-performance battery cell;
Fig. 11 schematically shows an exemplary embodiment of a battery arrangement;
Fig. 12 schematically shows an exemplary embodiment of a high-performance battery cell;
Fig. 13 schematically shows a detailed view of an exemplary embodiment of an electrical contact of a high-performance battery cell;
Fig. 14 schematically shows a detailed view of an exemplary embodiment of an electrical contact of a high-performance battery cell;
Fig. 15 schematically shows a detailed view of an exemplary embodiment of an electrical contact of a high-performance battery cell;
Fig. 16 schematically shows an exemplary embodiment of two high-performance battery cells;
Fig. 17 schematically shows an exemplary embodiment of several high-performance battery cells;
Fig. 18 schematically shows an exemplary embodiment of several high-performance battery cells;
Fig. 19 schematically shows an exemplary embodiment of two high-performance battery cells;
Fig. 20 schematically shows an exemplary embodiment of several high-performance battery cells;
Fig. 21 schematically shows an exemplary embodiment of two high-performance battery cells;
Fig. 22 schematically shows an exemplary embodiment of several high-performance battery cells;
Fig. 23 schematically shows an exemplary embodiment of a battery arrangement;
Fig. 24 schematically shows an exemplary embodiment of a battery arrangement;
Fig. 25 schematically shows an exemplary embodiment of a battery arrangement;
Fig. 26 schematically shows an exemplary embodiment of a battery arrangement;
Fig. 27 schematically shows a detailed view of an exemplary embodiment of a battery arrangement;
Fig. 28 schematically shows an exemplary embodiment of several high-performance battery cells;
Fig. 29 schematically shows an exemplary embodiment of several high-performance battery cells;
Fig. 30 schematically shows an exemplary embodiment of a high-performance battery cell;
Fig. 31 schematically shows an exemplary embodiment of a high-performance battery cell;
Fig. 32 schematically shows a detailed view of an exemplary embodiment of electrical contacts of a high-performance battery cell in a first state;
Fig. 33 schematically shows the electrical contacts of figure 32 in a second state;
Fig. 34 schematically shows a detailed view of an exemplary embodiment of electrical contacts of a high-performance battery cell in a first state;
Fig. 35 schematically shows the electrical contacts of figure 34 in a second state;
Fig. 36 schematically shows a detailed view of an exemplary embodiment of electrical contacts of a high-performance battery cell in a first state;
Fig. 37 schematically shows the electrical contacts of figure 36 in a second state.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

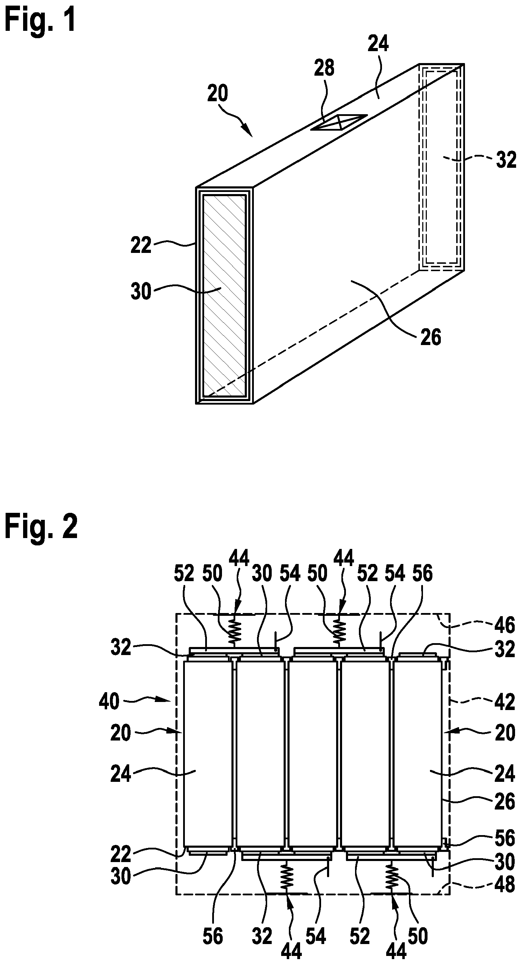

Fig. 1 schematically shows an exemplary embodiment of a high-performance battery cell 20. The high-performance battery cell 20 has a nominal capacity between 15 Ah and 1.000 Ah. The nominal capacity may be between 20 Ah and 500 Ah, e.g. between 20 Ah and 200 Ah. The high-performance battery cell 20 comprises a cell body and at least two electrical contacts, in particular a first electrical contact 30 and a second electrical contact 32. The cell body comprises at least two side surfaces having different sizes. In particular, the cell body may comprise a first side 22, a second side 24, and a third side 26. The first side 22 may be smaller than the second side 24, and the second side 24 may be smaller than the third side 26. Optionally, the cell body may have a prismatic shape. For example, the cell body may have a cuboid shape.

The terms "first", "second", and "third" side may be used within this description to differentiate the sides having different sizes from each other. Because the following description refers to an embodiment in which the cell body has a cuboid shape and because in a cuboid to opposite sides always have the same size, all of the following embodiments of the cell bodies have two opposing first sides 22, two opposing second sides 24, and two opposing third sides 26.

At least one of the electrical contacts, e.g. the first electrical contact 30 or both electrical contacts 30, 32, may be formed and arranged such that the corresponding electrical contact 30, 32 covers between 5% and 100%, e.g. between 25% and 100%, e.g. between 50% and 100%, e.g. between 75% and 100%, of at least one of the side surfaces, e.g. the first side surface 22. The electrical contacts 30, 32 may be arranged at opposite sides of the battery cell 20. Alternatively, the electrical contacts 30, 32 may be arranged on the same side or on neighboring and/or adjacent sides of the battery cell 20. Optionally, the battery cell 20 may comprise two or more first electrical contacts 30, and/or two or more second electrical contacts 32, wherein the first electrical contacts 30 may be coupled to the same pole of the battery cell 20, e.g. a negative pole, and/or the second electrical contacts 32 may be coupled to the same pole of the battery cell 20 also, e.g. a positive pole.

The high-performance battery cell 20 may comprise a vent 28. The vent 28 may be configured to release gas from inside of the battery cell 20, if a pressure of the gas exceeds a predetermined gas pressure threshold. For example, the vent 28 may comprise or may consist of a bursting disc.

Fig. 2 schematically shows an exemplary embodiment of a battery arrangement. The battery arrangement comprises a contact structure 40 and at least one, preferably two or more, e.g. 5, high-performance battery cells 20. The contact structure 40 may be arranged for mechanically holding and electrically contacting the battery cells 20. In particular, the contact structure 40 may comprise a compartment 42 for accommodating the battery cells 20 and at least one elastic and electrically conductive contact element 44 for mechanically holding and electrically contacting the battery cells 20 within the compartment 42.

The high-performance battery cells 20 may correspond to the above high-performance battery cell 20. The battery cells 20 may be arranged within the compartment 42. In particular, the battery cells 20 may be arranged within the compartment 42 such that the pressure applied by the contact elements 44 is directed from one of the first sides 22 to the other side 22 of the same battery cell 20.

The compartment 42 may comprise a first inner side wall 46 and a second inner side wall 48 opposite to the first inner side wall 46. The contact element 44 may be arranged at the first inner side wall 46 of the compartment 42 and may protrude into the compartment 42. The compartment 42 and the contact element 44 may be configured for holding the battery cells 20 by a press-fit between the contact element 44 and the second inner side wall 48 of the compartment 42. Therefore, the contact element 44, in particular the spring or the elastic part of the contact element 44, may be loaded and/or biased when the battery cells 20 are properly arranged within the compartment 42. The loaded and/or biased contact element 44 may provide the pressure for the press-fit connection. Optionally, another contact element 44 may be arranged at the second inner side wall 48 of the compartment 42, wherein the contact elements 44 may be configured for holding the battery cells 20 by the press-fit between the contact elements 44.

The contact element 44 may be configured for electrically contacting the battery cell 20. For example, at least a part of the contact element 44 may be electrically conductive and may be coupled to an input or output of the entire battery arrangement. The contact element 44 may comprise an elastic part and an electrically conductive part being coupled to each other. For example, the contact element 44 may comprise an elastic spring 50 and an electrically conductive contact plate 52. Alternatively, the elastic part may be an elastic body made of an elastic material, e.g. a polymer, rubber or silicon. In case of the contact element 44 not being a spring, the contact element 44, in particular the elastic body of the contact element 44, may have a modulus of elasticity between 0.01 GPa and 40 GPa, e.g. between 0.1 GPa and 1 GPa, and/or may comprise an elastomer.

One or more of the contact elements 44 may be configured such that each of the corresponding contact elements 44 holds and electrically contacts two or more battery cells 20. For example, the contact element 44 may comprise a contact plate 52 for contacting the two or more battery cells 20. In particular, the contact plate 52 may be configured for electrically contacting an electrical contact 30, 32 of a first battery cell 20 and an electrical contact 30, 32 of a second battery cell 20. Alternatively, the contact plate 52 may contact multiple parallel battery cells 20 similarly to their succeeding series of arranged parallel battery cells 20. The contact plate 52 may face the battery cells 20 and/or may be arranged between the spring or the elastic part, and the corresponding battery cells 20. The contact plate 52 may extend over at least a part of the sides of the battery cells 20 facing the contact element 44.

In the embodiment shown in figure 2, the battery cells 20 are electrically connected in series. In particular, the first electrical contact 30 of one of the battery cells 20 and the second electrical contact 32 of the adjacent the battery cell 20 may be connected to each other via the same contact plate 52. For example, in figure 2 the very left contact element 44 and the very right contact element 44 may be coupled to an input and/or output (both not shown) of the battery arrangement. The input and/or output may be coupled to an electrical machine, e.g. an electro motor or a generator, and/or to an electrical device. The battery arrangement, and the electrical machine and/or the electrical device may be arranged within a vehicle, e.g. an electric vehicle, such as an electric car, train, bus, subway, etc.

Optionally, one or more spacers 56 may be arranged between adjacent battery cells 20 and/or between the outer battery cells 20 and inner walls of the compartment 42. The spacers 56 may be configured for providing a distance between the battery cells 20 and/or between the outer battery cells 20 and the inner walls of the compartment 42. The spacers 56 may also be configured for assisting the contact element 40 in holding the battery cells 20 by the press-fit. In other words, the battery cells 20 may be partly held within the compartment 42 by the spacers 56 being sandwiched and/or jammed between two adjacent battery cells 20 or between one of the battery cells 20 and the compartment 42.

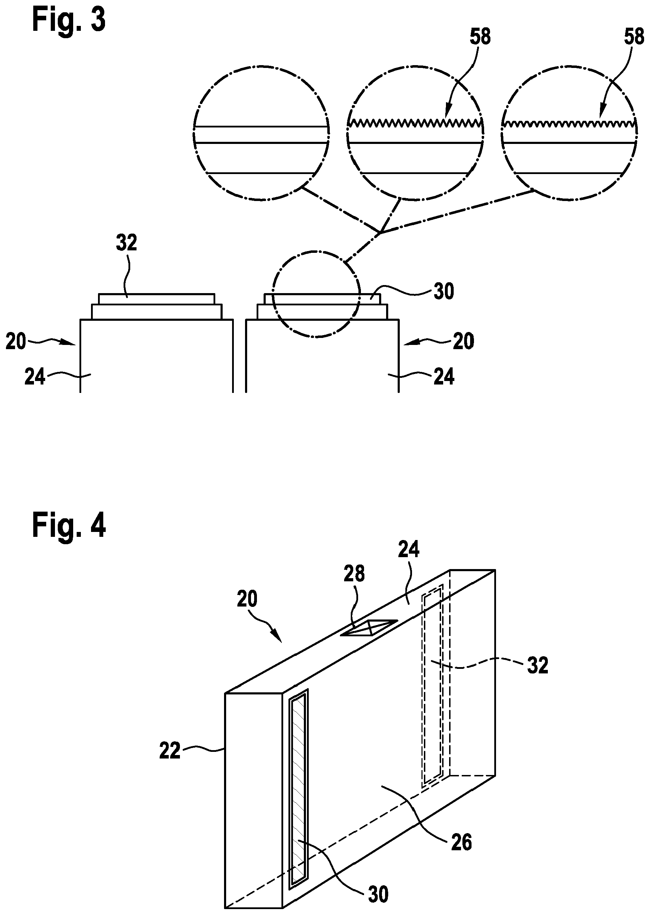

Fig. 3 schematically shows a detailed view of an exemplary embodiment of electrical contacts of a high-performance battery cell, e.g. the electrical contacts 30, 32 of the above battery cells 20. A surface of the at least one of the electrical contacts 30, 32 may comprise a macroscopic 3D-structure 58 for enhancing a size of the surface, wherein the surface faces away from the cell body. Optionally, the contact element 44 to which the electrical contact 30, 32 comprising the 3D-structure 58 is connected comprises another 3D-structure 58, wherein the 3D-structures 58 may be configured for being engaged with each other. The 3D-structure 58 may comprise e.g. a zic-zac profile, or a plurality of conical, tapered, domed, or pyramidal protrusions. That the 3D-structure 58 is macroscopic means in this context, that a hight of the structure, e.g. a hight of the top of the profile or, respectively, of the protrusions, measured from a bottom of the 3D-structure 58 is within a range from 0.001 mm to 10 mm, e.g. from 0.5 mm to 5 mm, e.g. about 1mm.

Alternatively or additionally, at least one of the electrical contacts 30, 32 may deformable and may comprise a compressive strength between 0.01 N/mm² and 400 N/mm². The compressive strength may be such that if the electrical contact 30, 32 of the battery cell 20 is deformed when the battery cell 20 is arranged within the compartment 42, the contact surface may be correspondingly increased and the electrical resistance of the contact is correspondingly decreased. Further, the deformed electrical contact 30, 32 may be exchanged when the battery cell 20 is exchanged.

Optionally, at least that part of the contact element 44 which contacts the electrical contact 30, 32 of the battery cell 20, e.g. the contact plate 52, may have a compressive strength which is smaller than the compressive strength of the corresponding electrical contact 30, 32 of the battery cell 20. If the electrical contact 30, 32 of the battery cell 20 and/or if the contact element 44 is deformed when the battery cell 20 is arranged in the compartment 42, the contact surface is correspondingly increased and the electrical resistance of the contact is correspondingly decreased. If the electrical contact 30, 32 of the battery cell 20 is deformed and if the contact element is not deformed when the battery cell 20 is arranged in the compartment 42, the deformed entity may be exchanged when the battery cell 20 is exchanged, wherein the undeformed entity may be used again for the new battery cell 20.

Fig. 4 schematically shows an exemplary embodiment of a high-performance battery cell 20. The high-performance battery cell 20 shown in figure 4 may widely correspond to the battery cell 20 explained with respect to figure 1. Therefore, only those features are explained in the following in which the battery cell 20 shown in figure 4 differs from the battery cell 20 shown in figure 1.

At least one of the electrical contacts 30, 32 of the battery cell 20 may be arranged on a side 22, 24, 26 of the cell body, which is not the smallest side, i.e. the first side 22, of the cell body. For example, one or both of the electrical contacts 30, 32 may be arranged on the largest side of the cell body, i.e. the third side 26. The electrical contacts 30, 32 may be arranged on the same or on different third sides 26 of the cell body.

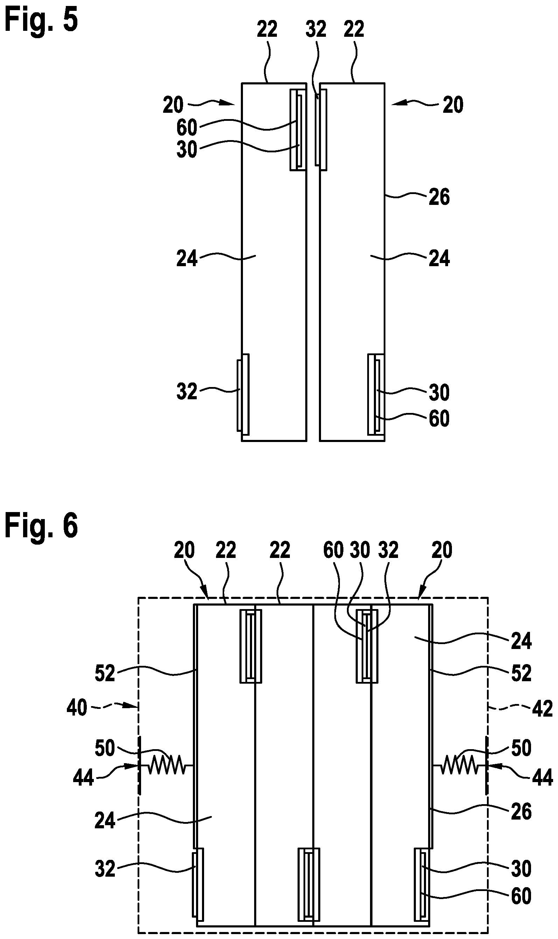

Fig. 5 schematically shows an exemplary embodiment of two high-performance battery cells 20. The high-performance battery cells 20 shown in figure 5 may widely correspond to the battery cells 20 explained above. Therefore, only those features are explained in the following in which the battery cells 20 shown in figure 5 differ from the above battery cells 20.

One of the electrical contacts 30, 32 may protrude from the third side 26 of the battery cell 20. The other one of the electrical contacts 30, 32 may be arranged within an indentation 60 of the battery cell 20 such that a surface of the corresponding electrical contact 30, 32 may be set back with respect to a surface of the third side 26 of the battery cell 20. For example, the second electrical contact 32 protruding from the third side 26 of the battery cell 20 may protrude from the third side 26 about the same amount as the first electrical contact 30 being set back from the third side 26 of the battery cell 20 is set back from the third side 26.

Further, the electrical contacts 30, 32 may be formed and arranged such that, if two of the battery cells 20 are properly arranged at each other, the protruding second electrical contact 32 of one of the battery cells 20 protrudes into the indentation 60 of the set-back first electrical contact 30 of another of the battery cells 20 such that the corresponding electrical contacts 30, 32 are electrically contacted to each other.

Fig. 6 schematically shows an exemplary embodiment of a battery arrangement. The battery arrangement shown in figure 6 may widely correspond to the battery arrangement shown in figure 2. Therefore, only those features are explained in the following in which the battery arrangement shown in figure 6 differs from the battery arrangement shown in figure 2. The battery cells 20 may correspond to the battery cells the 20 explained with respect to figure 5.

The contact elements 44 may be configured for mechanically holding the battery cells 20 within the compartment 42 by the press-fit only. Optionally, additional mechanical fixation means may be provided, e.g. in the form of spacers as explained below. Alternatively, the contact elements 44 may be configured for electrically contacting the battery cells 20 within the compartment 42. In the latter case, the contact plates 52 may overlap and/or directly contact the electrical contacts 30, 32 arranged on the same side as the corresponding contact plate 52.

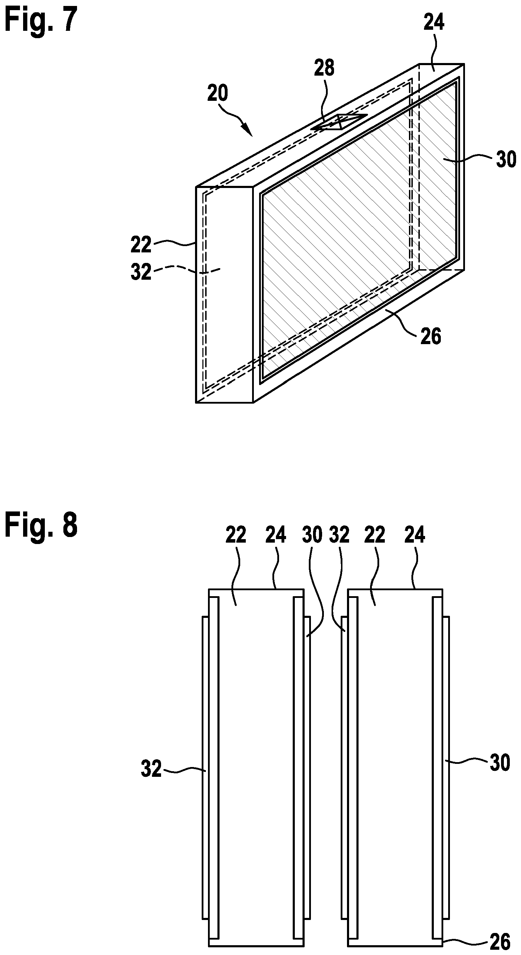

Fig. 7 schematically shows an exemplary embodiment of a high-performance battery cell 20. The high-performance battery cell 20 shown in figure 7 may widely correspond to one of the battery cells 20 explained above. Therefore, only those features are explained in the following in which the battery cell 20 shown in figure 7 differs from the above battery cells 20. At least one of the electrical contacts 30, 32 is arranged on the largest side, i.e. the third side 26, of the cell body.

Fig. 8 schematically shows an exemplary embodiment of two high-performance battery cells 20. The high-performance battery cells 20 shown in figure 8 may widely correspond to the battery cell 20 explained with respect to figure 7. Therefore, only those features are explained in the following in which the battery cell 20 shown in figure 8 differs from the battery cell 20 shown in figure 7. The first electrical contact 30 of one of the battery cells 20 faces the second electrical contact 30 of the other one of the battery cells 20.

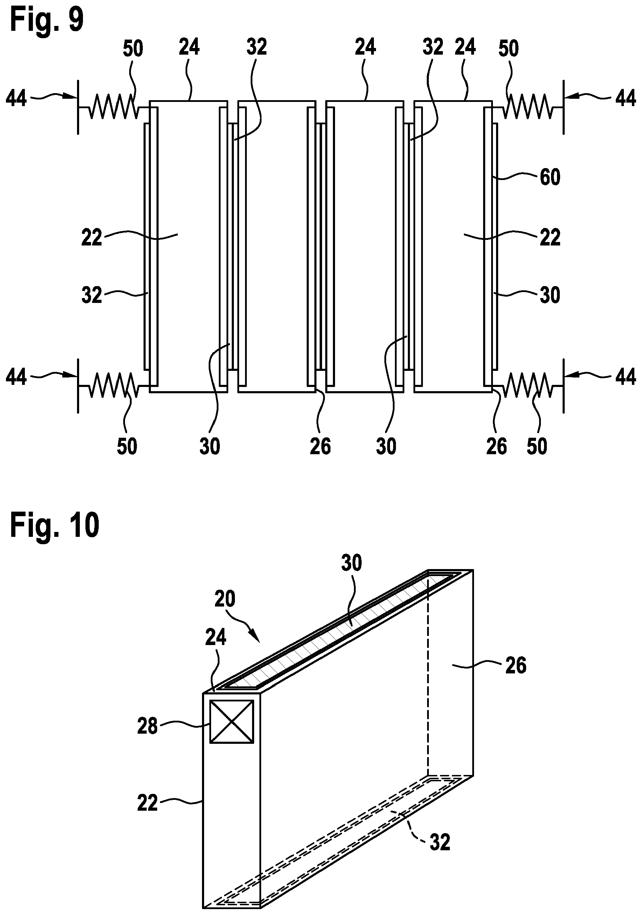

Fig. 9 schematically shows an exemplary embodiment of a battery arrangement. The battery arrangement shown in figure 9 may widely correspond to the battery arrangement shown in figure 6. Therefore, only those features are explained in the following in which the battery arrangement shown in figure 9 differs from the battery arrangement shown in figure 6.

The battery cells 20 may correspond to the battery cells 20 explained with respect to figure 8. The first electrical contact 30 of one of the battery cells 20 faces the second electrical contact 30 of an adjacent one of the battery cells 20. The battery cells 20 are electrically connected in series. The contact structure 40 may comprise up to four or more contact elements 44. In particular, two of the contact elements 44 may be arranged on the first inner side wall 46 (not shown in figure 9) of the compartment 42 and the other two of the contact elements 44 may be arranged on the second inner side wall 48 (not shown in figure 9) of the compartment 42.

The contact elements 44 may be configured for mechanically holding the battery cells 20 within the compartment 42 by the press-fit only. In this case, optionally, the contact plates 52 may be omitted. Alternatively, the contact elements 44 may be configured for electrically contacting the battery cells 20 within the compartment 42. In the latter case, the contact plates 52 may be arranged such that they overlap and/or directly contact the electrical contacts 30, 32 arranged on the same side as the corresponding contact plate 52.

Fig. 10 schematically shows an exemplary embodiment of a high-performance battery cell 20. The high-performance battery cell 20 shown in figure 10 may widely correspond to one of the battery cells 20 explained above. Therefore, only those features are explained in the following in which the battery cell 20 shown in figure 10 differs from the above battery cells 20. At least one of the electrical contacts 30, 32 is arranged on the second largest side, i.e. the second side 24, of the cell body. The vent 28 may be arranged on the first side 22.

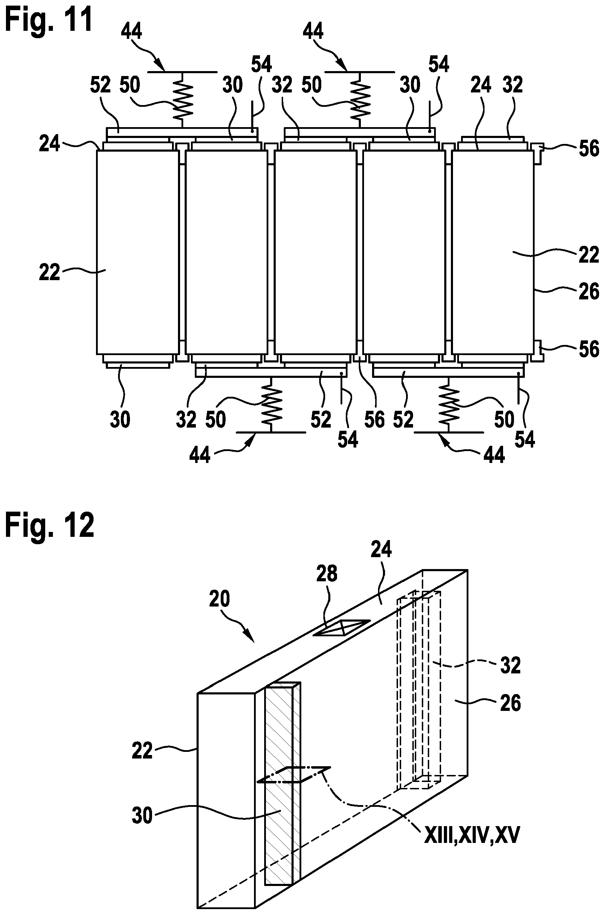

Fig. 11 schematically shows an exemplary embodiment of a battery arrangement. The battery arrangement shown in figure 11 may widely correspond to the battery arrangement shown in figure 2. Therefore, only those features are explained in the following in which the battery arrangement shown in figure 11 differs from the battery arrangement shown in figure 2. The battery cells 20 may correspond to the battery cell 20 explained with respect to figure 10. The battery cells 20 may be arranged within the compartment 42 (not shown in figure 11) such that the pressure applied by the contact elements 44 is directed from one of the second sides 24 to the other second side 24 of the same battery cell 20. The contact elements 44 may be electrically coupled to a corresponding BMS contact 54. For example, the contact plates 52 may be coupled to the corresponding BMS contact 54. The BMS contacts 54 couple the corresponding contact elements 44 to the BMS.

Fig. 12 schematically shows an exemplary embodiment of a high-performance battery cell 20. The high-performance battery cell 20 shown in figure 12 may widely correspond to the battery cell 20 explained with respect to figure 4. Therefore, only those features are explained in the following in which the battery cell 20 shown in figure 12 differs from the battery cell 20 shown in figure 4.

At least one of the electrical contacts 30, 32, e.g. the first electrical contact 30, forms an engaging mean configured for being engaged to another engaging mean. The engaging means may be configured for providing a form-fit connection and/or a press-fit connection between the corresponding battery cells 20. One of the engaging means may be arranged at another battery cell 20 as the other engaging mean, or at the contact structure 40 for holding the battery cell 20. For example, the first electrical contact 30 of one of the battery cells 20 may be configured for being engaged to the second electrical contact 32 of another battery cell 20. So, the electrical contacts 30, 32 may be configured for mechanically holding and electrically contacting adjacent battery cells 20.

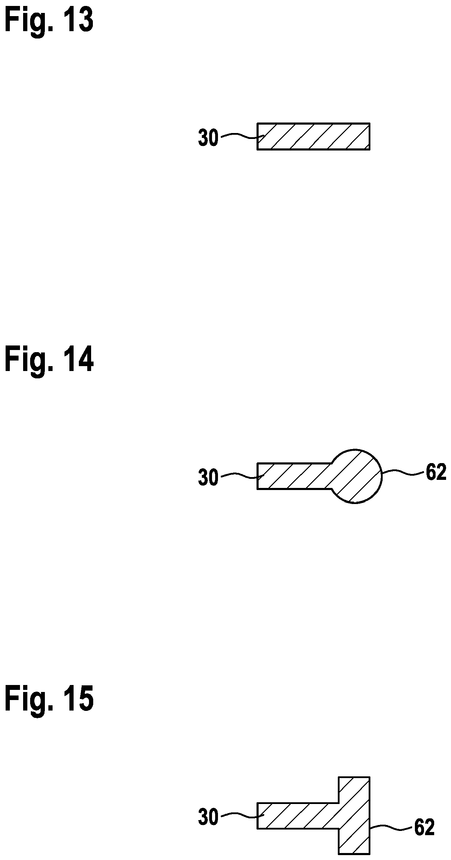

Fig. 13 schematically shows a detailed view of an exemplary embodiment of an electrical contact, e.g. the first electrical contact 30, of a high-performance battery cell, e.g. of the battery cell 20 explained with respect to figure 12. In this embodiment, the first electrical contact 30 e.g. may have a rectangular shape. In this context, the second electrical contact 32 may have a nut comprising a corresponding rectangular shape for accommodating the rectangular first electrical contact 30.

Fig. 14 schematically shows a detailed view of an exemplary embodiment of an electrical contact, e.g. the first electrical contact 30, of a high-performance battery cell, e.g. of the battery cell 20 explained with respect to figure 12. In this embodiment, the first electrical contact 30 may have a rectangular section extending away from the cell body and a circular bulge 62 at the end of the first electrical contact 30 facing away from the cell body. In this context, the second electrical contact 32 may have a nut comprising a corresponding rectangular section and a corresponding circular section for accommodating the rectangular part and bulge 62 of the first electrical contact 30.

Fig. 15 schematically shows a detailed view of an exemplary embodiment of an electrical contact, e.g. the first electrical contact 30, of a high-performance battery cell, e.g. of the battery cell 20 explained with respect to figure 12. In this embodiment, the first electrical contact 30 may have a rectangular section extending away from the cell body and a rectangular bulge 62 at the end of the first electrical contact 30 facing away from the cell body. In this context, the second electrical contact 32 may have a nut comprising two corresponding rectangular sections for accommodating the rectangular section and rectangular bulge 62 of the first electrical contact 30.

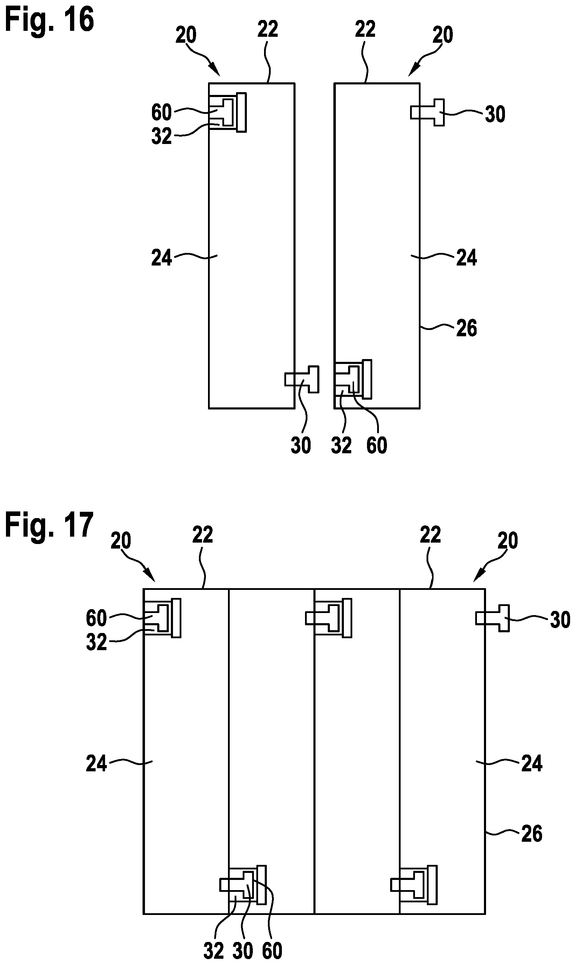

Fig. 16 schematically shows an exemplary embodiment of two high-performance battery cells 20. The battery cells 20 shown in figure 16 may widely correspond to the battery cells 20 explained with respect to figure 12 and may comprise the first electrical contact 30 as explained with respect to figure 15. Therefore, only those features are explained in the following in which the battery cell 20 shown in figure 16 differs from the battery cell 20 shown in figure 12. From figure 16 it may be seen that the indentation 60, in which the second electrical contact 32 is arranged, of one of the battery cells 20 may be configured as the nut for receiving the first electrical contact 30 of another battery cell 20.

Fig. 17 schematically shows an exemplary embodiment of several high-performance battery cells 20. The battery cells 20 shown in figure 17 may widely correspond to the battery cells 20 explained with respect to figure 16. From figure 17 it may be seen that the first electrical contacts 30 of the battery cells 20 may be engaged into the second electrical contacts 32 of the adjacent battery cells 20.

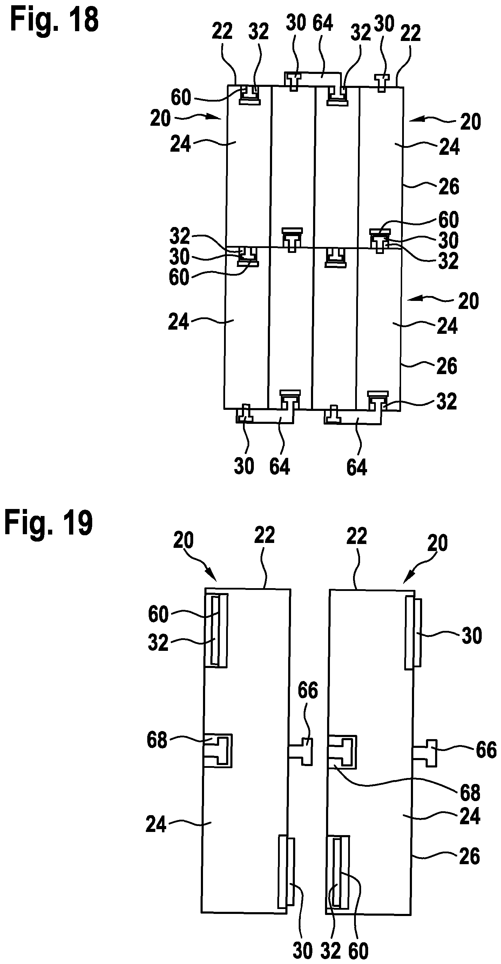

Fig. 18 schematically shows an exemplary embodiment of several high-performance battery cells 20. The battery cells 20 shown in figure 18 may widely correspond to the battery cells 20 explained with respect to figure 16. Therefore, only those features are explained in the following in which the battery cells 20 shown in figure 18 differ from the battery cells 20 shown in figure 16. The electrical contacts 30, 32 may be arranged on the first sides 22 of the battery cells 20. The electrical contacts 30, 32 may be formed as the engaging means. The first electrical contacts 30 of the battery cells 20 may be mechanically and/or electrically coupled to the second electrical contacts 32 of the adjacent battery cells 20 by connectors 64. The connectors 64 may comprise engaging means configured for being engaged with the electrical contacts 30, 32. For example, the first electrical contacts 30 form third engaging means, e.g. male engaging means protruding from a housing of the battery cell 20, the second electrical contacts 32 form fourth engaging means, and the connectors 64 comprise the corresponding female and, respectively male counterparts of the engaging means. Alternatively, the first and second electrical contacts 32 may be comprise the same form and may form the third or fourth engaging mean, wherein the connectors 64 may comprise two corresponding identical counterparts. The different shapes or/and sizes of the male protruding engaging means may ensure a correct polarity and therefore prevent unintended failures during system assembly. Similarly interconnecting pieces could be formed to connect single or multiple parallel battery cells 20 to their adjacent battery cells 20 arranged in series or parallel. The connectors 62 may be made of or may comprise an electrically conductive material.

Fig. 19 schematically shows an exemplary embodiment of two high-performance battery cells 20. The battery cells 20 shown in figure 19 may widely correspond to the battery cells 20 explained with respect to figure 5. Therefore, only those features are explained in the following in which the battery cells 20 shown in figure 19 differ from the battery cells 20 shown in figure 5.

The high-performance battery cells 20 may comprise first engaging means 66 being arranged at one side, e.g. the third side 26, of the corresponding battery cell 20, and second engaging means 68 being arranged at another side, e.g. the opposing third side 26, of the corresponding battery cell 20. In this context, the first and second electrode 30, 32 each forming an engaging mean, as explained above, may be referred to as third engaging mean and, respectively, fourth engaging mean. The first and second engaging means 66, 68 may be arranged in the middle of the corresponding third side 26 of the cell body. Alternatively, the first and second engaging means 66, 68 may be arranged outside of the middle of the corresponding third side 26 of the cell body. The first engaging means 66 may be configured for being engaged to second engaging means 68 of another battery cell 20, e.g. the adjacent battery cell 20, and the second engaging means 68 may be configured for being engaged to first engaging means 66 of further another battery cell 20, e.g. a further adjacent battery cell 20. A shape of the first engaging means 66 may correspond to the shape of the third engaging means explained with respect to figure 15. A shape of the second engaging means 68 is adapted to the shape of the first engaging means 66 such that the first engaging means 66 may be held by the second engaging means 68 by a form-fit.

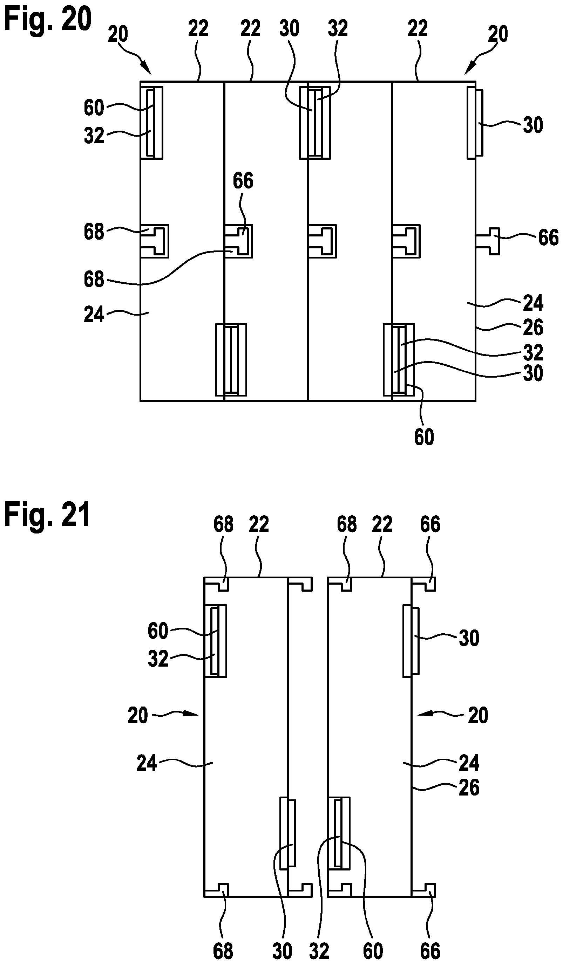

Fig. 20 schematically shows an exemplary embodiment of several high-performance battery cells 20. The battery cells 20 shown in figure 20 correspond to the battery cells 20 explained with respect to figure 19, wherein the battery cells 20 are engaged with each other by the first and second engaging means 66, 68.

Fig. 21 schematically shows an exemplary embodiment of two high-performance battery cells 20. The battery cells 20 shown in figure 21 may widely correspond to the battery cells 20 explained with respect to figure 19. Therefore, only those features are explained in the following in which the battery cells 20 shown in figure 21 differ from the battery cells 20 shown in figure 19.

The first engaging means 66 may be formed as brackets. The first engaging means 66 may be arranged at opposing edges of the same sides, e.g. the third sides 26, of the battery cells 20. The second engaging means 68 may be correspondingly arranged at opposing edges of the same opposing sides, e.g. the opposing third sides 26, of the battery cells 20. The second engaging means 68 may be provided as recesses within the cell body and may be configured for receiving the first engaging means 66. In other words, the second engaging means 68 may be configured such that the first engaging means 66 may be engaged into the second engaging means 68. Then, the battery cells 20 may be engaged with each other by the first and second engaging means 66, 68. The first engaging means 66 may be parts of the battery housing or may be additional parts which engage to the corresponding second engaging means, i.e. the corresponding recesses, on both battery cells 20 to be combined. In addition, the engaging means 66, 68 may be formed on two or more of the sides 22, 24, 26 and/or edges of the battery cell 20.

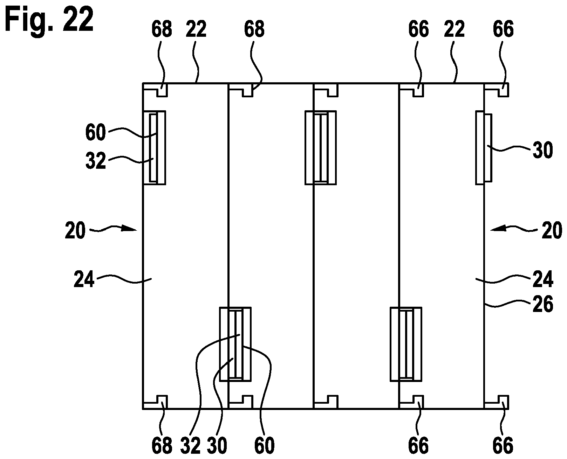

Fig. 22 schematically shows an exemplary embodiment of several high-performance battery cells 20. The battery cells 20 shown in figure 22 correspond to the battery cells 20 explained with respect to figure 21, wherein the battery cells 20 are engaged with each other by the first and second engaging means 66, 68.

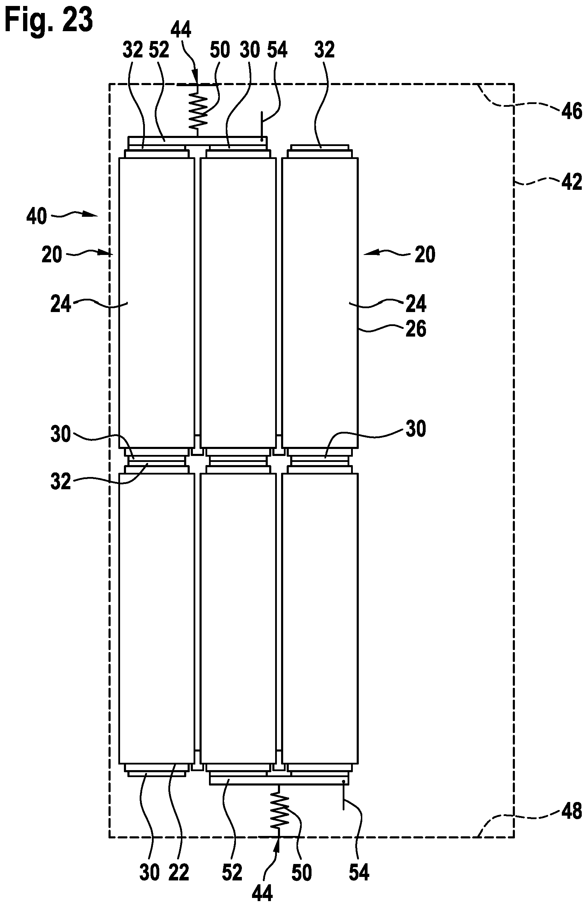

Fig. 23 schematically shows an exemplary embodiment of a battery arrangement. The battery arrangement shown in figure 23 may widely correspond to the battery arrangement explained with respect to figure 2. Therefore, only those features are explained in the following in which the battery arrangement shown in figure 23 differs from the battery arrangement shown in figure 2. Two or more battery cells 20 are arranged between one pair of the contact elements 44. The two or more battery cells 20 are pressed against each other by the corresponding pair of contact elements 44. The two battery cells 20 held by one pair of the contact elements 44 are electrically arranged in series.

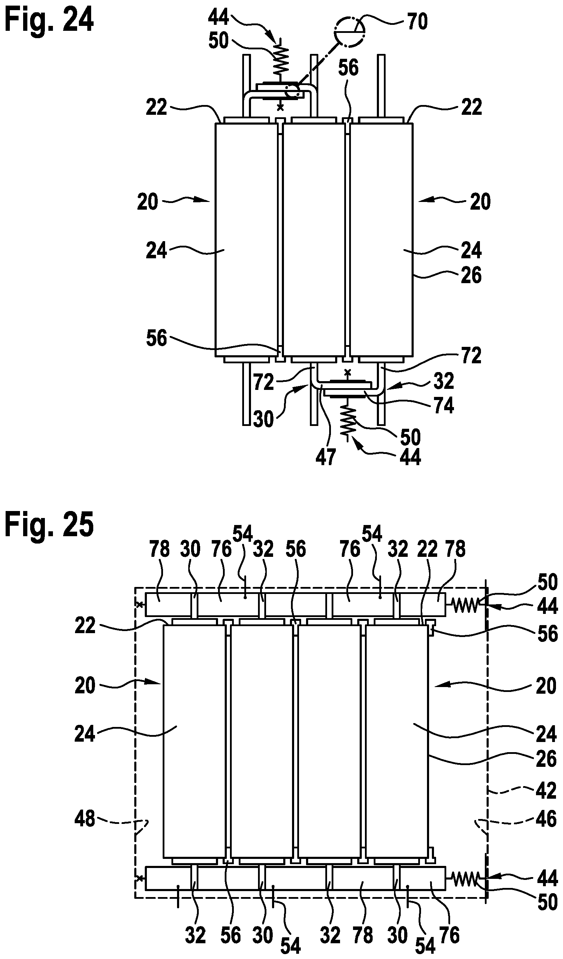

Fig. 24 schematically shows an exemplary embodiment of a battery arrangement. The battery arrangement shown in figure 24 may widely correspond to the battery arrangement explained with respect to figure 2. Therefore, only those features are explained in the following in which the battery arrangement shown in figure 24 differs from the battery arrangement shown in figure 2.

At least one of the electrical contacts 30, 32 of the battery cells 20 may comprise a first section 72 extending away from the cell body and a second section 74 extending away from the first section 72. An angle between the first section 72 and the second section 74 may be 90°. The second section 74 of one of the battery cells 20 may extend towards a side, e.g. the third side 26, of the same battery cell 20. A distance from the first section 72 to that side to which the second section 74 of the same electrical contact 30, 32 extends may be smaller than a length of the second section 74. Therefore, the second section 74 of one battery cell 20 may overlap the second section 74 of a neighbouring or adjacent battery cell 20. In particular, the second section 74 of the first electrical contact 30 of one battery cell 20 may overlap the second section 74 of the second electrical contact 32 of the neighbouring or adjacent battery cell 20. The contact element 44 may be configured for applying the pressure on one of the second sections 74 such that this second section 74 is pressed against the other second section 74 of the other battery cell 20 such that the corresponding electrical contacts 30, 32 are contacted with each other.

Fig. 25 schematically shows an exemplary embodiment of a battery arrangement. The battery arrangement shown in figure 25 may widely correspond to the battery arrangement explained with respect to figure 2. Therefore, only those features are explained in the following in which the battery arrangement shown in figure 25 differs from the battery arrangement shown in figure 2.

At least one of the electrical contacts 30, 32 of one of the battery cells 20 may extend away from the corresponding battery cell 20 in an extension direction. The battery cell 20 may be held by the press-fit between the contact element 44 and the second inner side wall 48 of the compartment 42 by the corresponding electrical contact 30, 32 being held by the press-fit, wherein the pressure of the press-fit is applied perpendicular to the extension direction. In other words, the pressure of the press-fit may be applied perpendicular to an extension direction of the battery cell 20. So, the battery cells 20 may be held within the compartment 42 by its electrical contacts 30, 32 being held by the press-fit and being squeezed between the first and second inner side wall 46, 48 of the compartment 42. In other words, the cell bodies may be held within the compartment 42 by the corresponding electrical contacts 30, 32 being held by the press-fit between the contact elements 44 and the second inner side wall 48 of the compartment 42. Optionally, one or more contact elements 44 may be arranged at the second inner side wall 48, wherein the battery cells 20 may be arranged between, mechanically held by, and/or electrically contacted by the contact elements 44.

Optionally, one, two or more spacers may be arranged between the contact elements 44 and the corresponding electrical contact 30, 32, or between corresponding electrical contacts 30, 32 of two neighbouring battery cells 20, wherein the spacers may be formed by conductors 76 or by isolators 78 as appropriate. For example, in figure 25, the battery cells 20 are electrically arranged in series, wherein the first electrical contact 30 of one of the battery cells 20 may be electrically connected to the second electrical contact 32 of the adjacent battery cell 20 by the corresponding conductor 76, and wherein the second electrical contact 32 of the one of the battery cells 20 may be electrically isolated from the first electrical contact 32 of the adjacent battery cell 20 by the corresponding isolator 78.

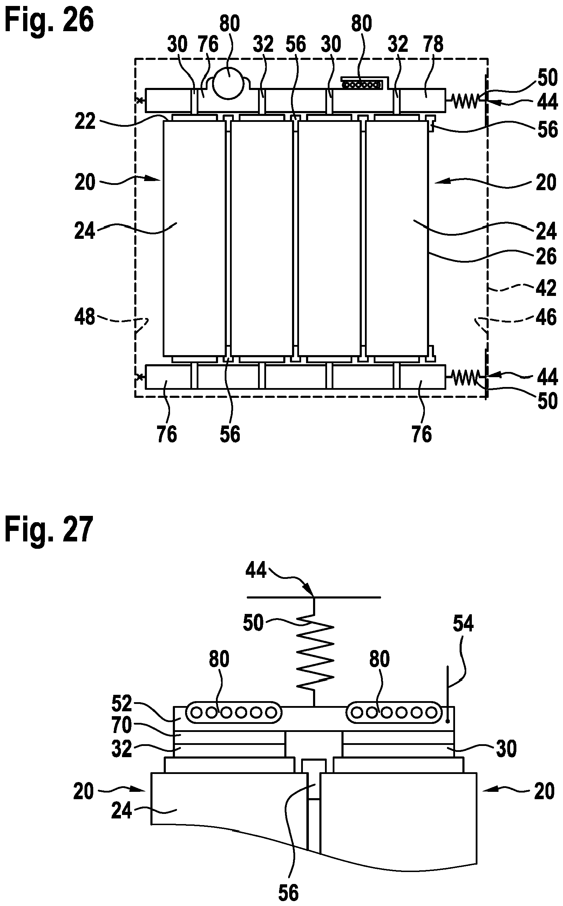

Fig. 26 schematically shows an exemplary embodiment of a battery arrangement. The battery arrangement shown in figure 26 may widely correspond to the battery arrangement explained with respect to figure 25. Therefore, only those features are explained in the following in which the battery arrangement shown in figure 26 differs from the battery arrangement shown in figure 25.

The contact structure 44 may comprise a cooling structure 80 which may be coupled to the conductors 76. The cooling structure 80 may be embedded within or attached to the conductors 76. The cooling structure 80 may comprise one or more tubes for guiding a cooling medium, e.g. water, wherein the tubes may be in direct physical contact with the conductors 76. For example, the conductors 76 may comprise corresponding recesses which may be used as the tubes of the cooling structure 80.

In figure 26, two different embodiments of the cooling structure 80 are shown. The left cooling structure 80 may comprise one single tube and the right cooling structure 80 may comprise several tubes arranged next to each other. Alternatively, the battery arrangement may comprise one or more cooling structures 80 of the same embodiment only. Alternatively the cooling structures 80 may be included in the isolators 78.

Fig. 27 schematically shows a detailed view of an exemplary embodiment of a battery arrangement. The battery arrangement shown in figure 27 may widely correspond to the battery arrangement explained with respect to figure 2. Therefore, only those features are explained in the following in which the battery arrangement shown in figure 27 differs from the battery arrangement shown in figure 2.

The contact structure 44 may comprise a cooling structure 80 which may be coupled to the contact element 44. The cooling structure 80 may be embedded within or attached to the contact element 44. In particular, the cooling structure 80 may be embedded within or attached to the contact plate 52 of the contact element 44. The cooling structure may comprise one or more tubes for guiding a cooling medium, e.g. water, wherein the tubes may be in direct physical contact with the contact element 44, in particular with the contact plate 52. For example, the contact element 44, in particular the contact plate 52, may comprise one or more recesses which may be used as correspondingly one or more tubes of the cooling structure 80.

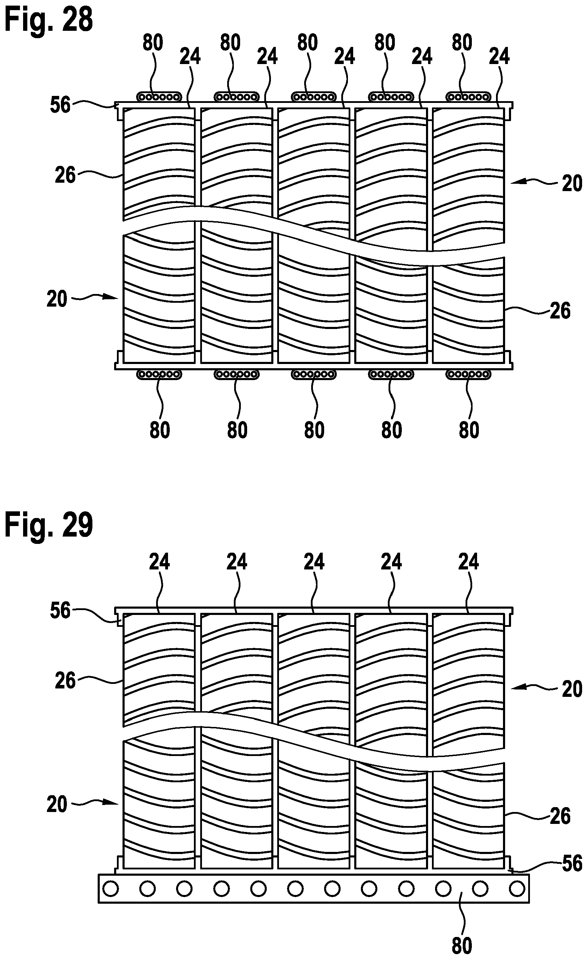

Fig. 28 schematically shows an exemplary embodiment of several high-performance battery cells 20. The battery cells 20 shown in figure 28 may widely correspond to the battery cells 20 explained with respect to figure 2. Therefore, only those features are explained in the following in which the battery cells 20 shown in figure 28 differ from the battery cells 20 shown in figure 2. The cooling structure 80 may be arranged at each of the second sides 24 of each of the battery cells 20. The cooling structure 80 may be directly coupled to the corresponding battery cell 20. Alternatively, the cooling structure 80 may be coupled to the corresponding battery cell 20 via the spacer 56. In this context, the spacer 56 may have a high thermal conductivity.

Fig. 29 schematically shows an exemplary embodiment of several high-performance battery cells 20. The battery cells 20 shown in figure 29 may widely correspond to the battery cells 20 explained with respect to figure 28. Therefore, only those features are explained in the following in which the battery cells 20 shown in figure 29 differ from the battery cells 20 shown in figure 28. The cooling structure 80 may be arranged at one of the second sides 24 of each of the battery cells 20 only.

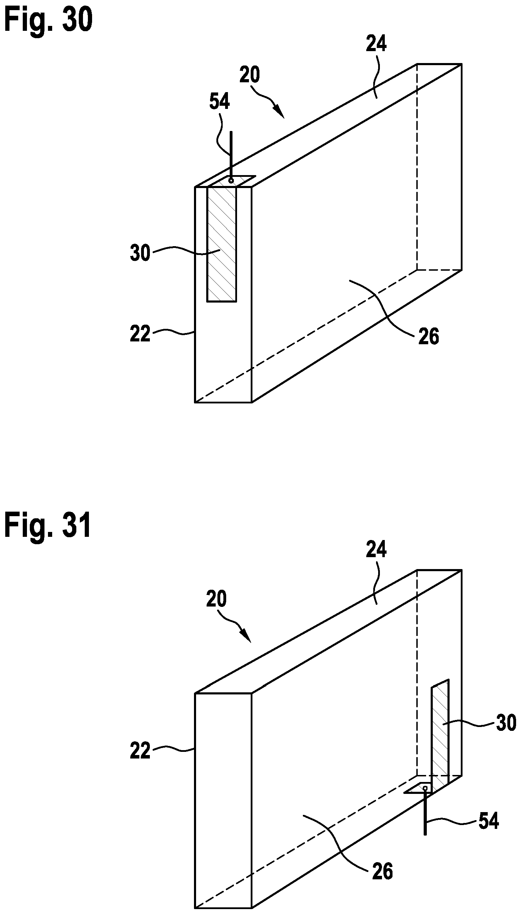

Fig. 30 schematically shows an exemplary embodiment of a high-performance battery cell 20. The battery cell 20 shown in figure 30 may widely correspond to the battery cell 20 explained with respect to figure 1. Therefore, only those features are explained in the following in which the battery cells 20 shown in figure 30 differ from the battery cell 20 shown in figure 1.

At least one of the electrical contacts 30, 32, e.g. the first electrical contact 30, may continuously extend over at least two sides of the battery cell 20, e.g. over the first and second sides 22, 24. The first electrical contact 30 extending over the first and second sides 22, 24 of the battery cell 20 may cover a part of the surfaces of the first and second sides 22, 24. Alternatively, the first electrical contact 30 may cover the whole surfaces of one or both of the corresponding sides 22, 24. For example, the part of the first electrical contact 30 being arranged on the first side 22 may be used for electrically contacting the battery cell 20 and the part of the first electrical contact 30 being arranged on the second side 24 may be used for electrically contacting the battery cell 20 to the BMS via the BMS contact 54.

Fig. 31 schematically shows an exemplary embodiment of a high-performance battery cell 20. The battery cell 20 shown in figure 31 may widely correspond to the battery cell 20 explained with respect to figure 30. Therefore, only those features are explained in the following in which the battery cells 20 shown in figure 31 differ from the battery cell 20 shown in figure 30. The first electrical contact 30 may continuously extend over the second and third sides 22, 24 of the battery cell 20.

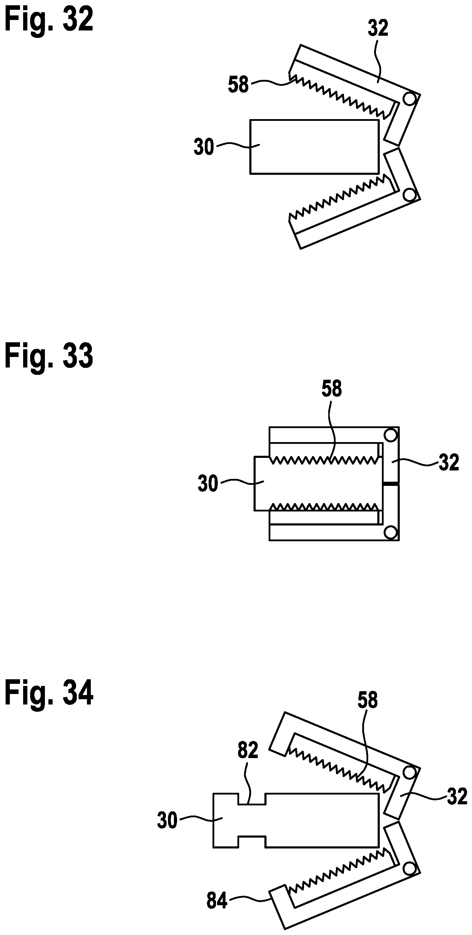

Fig. 32 schematically shows a detailed view of an exemplary embodiment of electrical contacts 30, 32 of a high-performance battery cell 20 in a first state. The battery cell 20 to which the electrical contacts 30, 32 shown in figure 32 belong may widely correspond to the battery cell 20 explained with respect to figure 12. Therefore, only those features are explained in the following in which the battery cells 20, in particular the electrical contacts 30, 32, shown in figure 32 differ from the battery cell 20 and, respectively, electrical contacts 30, 32 shown in figure 12.

The first electrical contact 30 may be formed as shown in and explained with respect to figure 13. The first electrical contact 30 may be arranged at one of the above high-performance battery cells 20. Alternatively, the first electrical contact 30 may be arranged at the contact structure 40, in particular, if the second electrical contact 32 is arranged at one of the above high-performance battery cells 20.

The second electrical contact 32 may be formed like a crocodile jaws. The second electrical contact 32 may be arranged at one of the above high-performance battery cells 20. Alternatively, the second electrical contact 32 may be arranged at the contact structure 40, in particular, if the first electrical contact 30 is arranged at one of the above high-performance battery cells 20. Optionally, the second electrical contact 32 may comprise the 3D-structure at the inside of the jaws.

In the first state the jaws may be open and ready to receive the first electrical contact 30. If the first electrical contact 30 is pushed into the jaws of the second electrical contact 32, the first electrical contact 30 presses against the bottom, i.e. the gullet, of the jaws such that the jaws may snap the first electrical contact 30.

Fig. 33 schematically shows the electrical contacts 30, 32 of figure 32 in a second state. In the second state, the first electrical contact 30 may be pushed into the jaws of the second electrical contact 32. In particular, the first electrical contact 30 may be pressed against the bottom, i.e. the gullet, of the jaws such that the jaws may snap the first electrical contact 30. In the second state, the first electrical contact 30 may be mechanically held and electrically coupled to the second electrical contact 32.

Fig. 34 schematically shows a detailed view of an exemplary embodiment of electrical contacts 30, 32 of a high-performance battery cell 20 in a first state. The electrical contacts 30, 32 shown in figure 34 may widely correspond to the electrical contacts 30, 32 explained with respect to figures 32 and 33. Therefore, only those features are explained in the following in which the battery cells 20 shown in figure 34 differ from the battery cells 20 shown in figure 32 and 33.

The first electrical contact 30 may comprise a taper 82. The second electrical contact 32 may comprise a protrusion 84. The protrusion 84 may be configured for being engaged into the taper 82. If the first electrical contact 30 is pushed into the jaws of the second electrical contact 32, the first electrical contact 30 presses against the bottom, i.e. the gullet, of the jaws such that the jaws snap the first electrical contact 30 and that the protrusion 84 may be engaged with the taper 82.

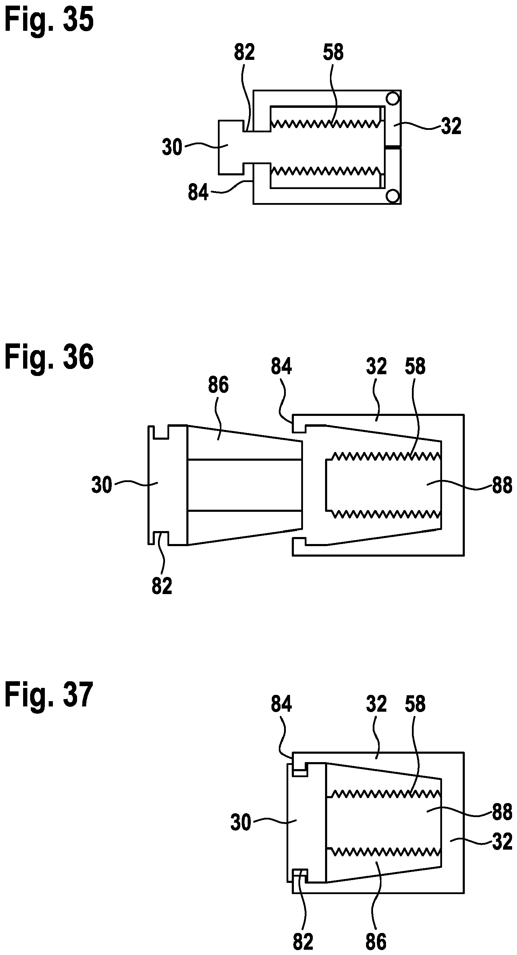

Fig. 35 schematically shows the electrical contacts 30, 32 of figure 34 in a second state. In the second state, the first electrical contact 30 may be pushed into the jaws of the second electrical contact 32. In particular, the first electrical contact 30 may be pressed against the bottom, i.e. the gullet, of the jaws such that the jaws may snap the first electrical contact 30. In the second state, the protrusion 84 may be engaged with the taper 82. Further, in the second state, the first electrical contact 30 may be mechanically held and electrically coupled to the second electrical contact 32.

Fig. 36 schematically shows a detailed view of an exemplary embodiment of electrical contacts 30, 32 of a high-performance battery cell 20 in a first state. The electrical contacts 30, 32 shown in figure 36 may widely correspond to the electrical contacts 30, 32 explained with respect to figures 34 and 35. Therefore, only those features are explained in the following in which the battery cells 20 shown in figure 36 differ from the battery cells 20 shown in figure 34 and 35.

The first electrical contact 30 may comprise two arms 86 which are separated from each other by a gap and tapers 82 for being engaged to the second electrical contact 32. The second electrical contact 32 comprises a cavity in which a shaft 88 may be arranged. The shaft 88 and the arms 86 are configured such that the shaft 88 may be arranged in the gap provided by the arms 86. The second electrical contact 32 may comprise one or more protrusions 84. The protrusions 84 may be configured for being engaged with the tapers 82. Optionally, the shaft 88 may comprise the 3D-structure 58. The 3D-structure 58 may be arranged at one or more sides of the shaft 88, the corresponding sides facing the arms 86, if the first electrical contact 30 is engaged with the second electrical contact 32.

Fig. 37 schematically shows the electrical contacts of figure 36 in a second state. In the second state, the first and second electrical contacts 30, 32 may be engaged with each other. In particular, the shaft 88 may be arranged within the gap provided by the arms 86 and/or the protrusions 84 may be arranged within the tapers 82.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: battery cell
- 22: first side
- 24: second side
- 26: third side
- 28: vent
- 30: first electrical contact
- 32: second electrical contact
- 40: contact structure
- 42: compartment
- 44: contact element
- 46: first inner side wall
- 48: second inner side wall
- 50: elastic body
- 52: contact plate
- 54: BMS contact
- 56: spacer
- 58: 3D-structure
- 60: indentation
- 62: bulge
- 64: connector
- 66: first engaging means
- 68: second engaging means
- 70: interface
- 72: first section
- 74: second section
- 76: conductor
- 78: isolator
- 80: cooling structure
- 82: taper
- 84: protrusion
- 86: arms
- 88: shaft

## Claims

1. A high-performance battery cell (20), comprising a cell body and at least two electrical contacts (30, 32), the cell body comprising at least two side surfaces (22, 24, 26), wherein at least one of the electrical contacts (30, 32) is formed and arranged such that the corresponding electrical contact covers between 5% and 100% of at least one of the side surfaces (22, 24, 26).

2. The high-performance battery cell (20) in accordance with claim 1, wherein
the at least two side surfaces (22, 24, 26) have different sizes; and
at least that electrical contact (30, 32), which covers between 5% and 100% of at least one of the side surfaces (22, 24, 26), is arranged on a side (22, 24, 26) of the cell body, which is not the smallest side (22, 24, 26) of the cell body.

3. The high-performance battery cell (20) in accordance with one of the preceding claims, wherein
at least that electrical contact (30, 32), which covers between 5% and 100% of at least one of the side surfaces (22, 24, 26), continuously extends over at least two sides (22, 24, 26) of the battery cell (20).

4. The high-performance battery cell (20) in accordance with one of the preceding claims, wherein
a surface of at least that electrical contact (30, 32), which covers between 5% and 100% of at least one of the side surfaces (22, 24, 26), comprises a macroscopic 3D-structure (58) for enhancing a size of the surface, wherein the surface faces away from the cell body.

5. The high-performance battery cell (20) in accordance with one of the preceding claims, wherein
at least one of the electrical contacts (30, 32) is deformable and comprises a compressive strength between 0.0001 N/mm² and 400 N/mm².

6. The high-performance battery cell (20) in accordance with one of the preceding claims, wherein
one of the electrical contacts (30, 32) protrudes from the corresponding side (22, 24, 26) of the battery cell (20); and
the other one of the electrical contacts (30, 32) is arranged within an indentation (60) of the battery cell (20) such that a surface of the corresponding electrical (30, 32) contact is set back with respect to a surface of the corresponding side (22, 24, 26) of the battery cell (20).

7. The high-performance battery cell (20) in accordance with one of the preceding claims, comprising:
first engaging means (66) being arranged at one side of the battery cell (20); and
second engaging means (68) being arranged at another side of the battery cell (20) facing away from the one side of the battery cell (20),
wherein the first engaging means (66) are configured for being engaged to second engaging means (68) of another battery cell (20), and
wherein the second engaging means (68) are configured for being engaged to first engaging means (66) of further another battery cell (20).

8. A high-performance battery cell (20), comprising a cell body and at least two electrical contacts (30, 32), wherein at least one of the electrical contacts (30, 32) forms a third engaging mean configured for being engaged to a fourth engaging mean of another battery cell (20) or of a contact structure (40) for holding the battery cell (20), wherein the third and fourth engaging means are configured for providing a form-fit connection and/or a press-fit connection.

9. The high-performance battery cell (20) in accordance with claim 8, wherein at least one of the electrical contacts (30, 32) forms the third engaging mean and wherein at least one of the other electrical contacts (30, 32) forms a fourth engaging mean of the high-performance battery cell (20), the fourth engaging mean of the high-performance battery cell (20) being configured for being engaged to a third engaging mean of another battery cell (20).

10. The high-performance battery cell (20) in accordance any one of the preceding claims, having a nominal capacity between 15 Ah and 1.000 Ah.

11. The high-performance battery cell (20) in accordance with one of the preceding claims, wherein the cell body has a prismatic shape.

12. A contact structure (40) for mechanically holding a high-performance battery cell (20), the contact structure (40) comprising:
at least one compartment (42) for accommodating the battery cell (20), the compartment (42) comprising a first inner side wall (46) and a second inner side wall (48) opposite to the first inner side wall (46); and
at least one elastic contact element (44), the contact element (44) being arranged at the first inner side wall (46) of the compartment (42) and protruding into the compartment (42);
wherein the compartment (42) and the contact element (44) are configured for holding the battery cell (20) by a press-fit between the contact element (44) and the second inner side wall (48) of the compartment (42).

13. The contact structure (40) in accordance with claim 12, wherein
at least a part of the contact element (44) is electrically conductive and configured for electrically contacting the battery cell (20).

14. The contact structure (40) in accordance with one of claims 12 or 13, wherein
the compartment (42) is configured for accommodating at least two of the battery cells (20); and
the contact element (44) is configured for holding and/or electrically contacting both battery cells (20).

15. The contact structure (40) in accordance with one of claims 12 to 14, wherein
at least that part of the contact element (44) which contacts the electrical contact (30, 32) of the battery cell (20) has a compressive strength which is smaller than the compressive strength of the corresponding electrical contact (30, 32) of the battery cell (20).

16. The contact structure (40) in accordance with one of claims 12 to 15, wherein
at least one of the electrical contacts (30, 32) of the battery cell (20) extends away from the corresponding battery cell (20) in an extension direction,
the battery cell (20) is held by the press-fit between the contact element (44) and the second inner side wall (48) of the compartment (42) by the electrical contact (30, 32) being held by the press-fit, wherein the pressure of the press-fit is applied perpendicular to the extension direction.

17. The contact structure (40) in accordance with one of claims 12 to 15, wherein
at least one of the electrical contacts (30, 32) of the battery cell (20) comprises a first section (72) extending away from the cell body and a second section (74) extending away from the first section (72),
an angle between the first section (72) and the second section (74) is 90°,
the second section (74) of one of the battery cells (20) overlaps the second section (74) of an adjacent battery cell (20), and
the contact element (44) is configured for applying the pressure on one of the second sections (74) such that this second section (74) is pressed against the other second section (74) for providing the electrical connection between the corresponding battery cells 20.

18. The contact structure (40) in accordance with one of claims 12 to 17, comprising a cooling structure (80) which is coupled to the contact element (44).

19. Battery arrangement, comprising
a contact structure (40) in accordance with one of claims 12 to 18; and
at least one high-performance battery cell (20) in accordance with one of claims 1 to 11, the battery cell (20) being arranged within the compartment (42) of the contact structure (40) and being mechanically hold and electrically contacted by the contact element 44.
